# FASCICULE DE BREVET EUROPEEN

(11) **EP 2 824 605 B1**
(45) Date de publication et mention de la délivrance du brevet: **08.11.2017**
(21) Numéro de dépôt: 14176228.6
(22) Date de dépôt: 09.07.2014
(51) Int. Cl.: G06F 21/86

(54) **Dispositif de paiement électronique présentant des moyens de blocage de l'accès à la mémoire fiscale**
Vorrichtung zur elektronischen Bezahlung, die Zugangsblockiermittel zum Alibispeicher umfasst
Electronic payment device having means for blocking access to the fiscal memory

(30) Priorité: 12.07.2013 FR 1356910
(43) Date de publication de la demande: 14.01.2015
(73) Titulaire: Ingenico Group, 75015 Paris (FR)
(72) Inventeur: Janot, Cyril, 26400 Grane (FR); Andre, Jérôme, 26800 Montoison (FR); Georges, Didier, 26120 Chabeuil (FR); Granddidier, Yann, 07610 Lemps (FR)
(74) Mandataire: Vidon Brevets & Stratégie

(56) Documents cités:
- EP-A1- 1 432 031
- EP-A2- 0 499 063
- WO-A1-2008/091470
- FR-A1- 2 864 286
- US-A- 5 389 738
- US-A1- 2012 106 113

## Description

Dispositif de paiement électronique présentant des moyens de blocage de l'accès à la mémoire fiscale.

### 1. Domaine de l'invention

Le domaine de l'invention est celui des terminaux de paiement, et notamment des terminaux de paiement électroniques. L'invention se rapporte notamment, mais non exclusivement, à un nouveau type de dispositif de paiement électronique qui peut être utilisé à d'autres fins que les opérations de règlement des achats.

### 2. Art antérieur

A l'heure actuelle, les terminaux de paiement sont majoritairement utilisés pour permettre le règlement des achats de biens et de services au sein de points de vente. Ces terminaux comprennent généralement un lecteur de carte à puce et un lecteur de carte magnétique. Ils comprennent également un écran, permettant notamment de visualiser des informations, telles que les montants des transactions, et un clavier de saisie de ces mêmes montants ainsi que de saisie des codes confidentiels des clients, ou bien un écran tactile.

Les terminaux les plus récents sont connectés à des caisses enregistreuses et/ou à des ordinateurs par l'intermédiaire d'un réseau de communication. De telles connexions peuvent être filaires, par exemple de type Ethernet, ou sans fil. Ces connexions permettent par exemple de se connecter à un serveur d'authentification ou à un serveur bancaire en vue de l'obtention d'une autorisation de débit. Le brevet US2012/106113 A1 donne un exemple d'un tel terminal. En revanche, les terminaux de paiement ne permettent pas, ou peu, de prendre en charge d'autres opérations que celles de règlement des achats. Par exemple, lorsqu'il est connecté à une caisse enregistreuse, le terminal de paiement transmet les données de l'opération effectuée à la caisse enregistreuse (lorsqu'il s'agit d'une caisse enregistreuse intelligente). Cette caisse enregistreuse enregistre dans un journal (ou journalise) les transactions de paiement (qu'il s'agisse de transactions à l'aide du terminal de paiement, de transactions par chèque ou encore de transactions en monnaie fiduciaire). Il arrive cependant qu'une telle caisse enregistreuse ne fonctionne pas ou mal. Ceci n'a heureusement pas pour conséquence de bloquer le paiement effectué sur le terminal de paiement. En revanche, la journalisation des paiements peut être erronée, ce qui peut poser problème, par exemple aux autorités en charge du recouvrement des créances fiscales. Par ailleurs, des commerçants peu scrupuleux peuvent rendre les caisses enregistreuses inopérantes dans le seul but de frauder les autorités en charge du recouvrement des créances fiscales. Ces pratiques ont notamment été observées dans certains pays dans lesquels la pression fiscale est peu facilement admise.

Dans d'autres contextes, le terminal de paiement n'est pas relié (physiquement ou par réseau) à une caisse enregistreuse. Dans ce cas, le fonctionnement de la caisse enregistreuse est indépendant de celui du terminal de paiement. Il n'est donc pas possible de faire le lien entre le journal de vente de la caisse enregistreuse et les transactions réalisées par le terminal, ce qui peut également être une source de fraude vis-à-vis de l'administration.

Il existe donc un besoin de solutions techniques permettant d'éviter ce type de fraude.

### 3. Exposé de l'invention

L'invention répond à ce besoin en proposant un terminal de paiement électronique comprenant un module de mémorisation de données relatives à au moins une transaction effectuée au moyen dudit terminal. Selon l'invention, un tel terminal comprend des moyens de blocage d'un accès audit module de mémorisation, aptes à empêcher tout accès audit module de mémorisation lorsque ledit terminal de paiement est intègre.

Ainsi, l'invention repose sur une approche tout à fait nouvelle et inventive des terminaux de paiement électronique. En effet, l'invention propose, dans un terminal de paiement intégrant un module de mémorisation spécifique des transactions effectuées, de sécuriser et même interdire tout accès à ce module et aux données qu'il contient, grâce à des moyens de blocage spécifiques décrits plus en détail ci-après. Ces moyens de blocage sont tels qu'il est presque impossible, tant que le terminal de paiement est intact et n'a subi aucune altération ni aucune atteinte, d'accéder au module de mémorisation, que ce soit par un accès physique au module lui-même (il est ainsi impossible de l'extraire du terminal de paiement), ou par un accès aux données qu'il contient (intrusion informatique ou numérique pour altérer les données contenues dans le module de mémorisation).

Un tel terminal de paiement électronique intègre par exemple des fonctions de caisse enregistreuse, et se substitue, pour les fonctions comptables et fiscales, à la caisse enregistreuse. D'autre part, le terminal peut intégrer plusieurs modules de mémorisation spécifiques, comprenant par exemple un module de mémorisation transactionnel (c'est-à-dire que chaque transaction est enregistrée) et un module de mémorisation cumulatif (mémorisant certaines données relatives à un cumul de l'ensemble des transactions effectuées). Dans ce cas, les moyens de blocage de l'invention visent plus particulièrement à empêcher tout accès au module de mémorisation cumulatif. Un tel module de mémorisation joue le rôle de mémoire fiscale des transactions effectuées au moyen du terminal de paiement, une telle mémoire étant destinée notamment à l'administration fiscale.

Ainsi, grâce à l'invention, il n'est plus possible pour un commerçant peu scrupuleux d'effacer certaines transactions mémorisées dans le module de mémorisation du terminal de paiement, ou de modifier le cumul de transactions mémorisé dans ce module, ni même d'extraire le module de mémorisation pour le remplacer par un autre module de mémorisation vierge par exemple.

Les moyens de blocage de l'accès au module de mémorisation peuvent prendre différentes formes alternatives ou cumulatives, qui sont décrites plus en détail ci-après.

Selon un premier aspect de l'invention, ledit module de mémorisation est inséré au sein d'une structure formant coffre-fort comprenant au moins deux circuits imprimés. Une telle structure formant coffre-fort constitue donc un premier moyen de blocage d'un accès au module de mémorisation, en ce qu'il est nécessaire de traverser un circuit imprimé pour accéder au module de mémorisation. On peut également prévoir d'insérer, dans ces circuits imprimés, des maillages métalliques (ou en anglais « wire mesh ») : ainsi, lorsque le maillage est suffisamment fin, toute tentative de percer un circuit imprimé pour accéder au module de mémorisation qu'il protège, se solde par un contact avec un fil métallique du « wire mesh », ce qui déclenche un court-circuit, ou tout autre signal électrique d'alerte d'intrusion.

Selon un mode de réalisation de l'invention, une telle structure de coffre-fort comprend :
- un premier circuit imprimé sur une face supérieure duquel est soudé ledit module de mémorisation ;
- un deuxième circuit imprimé formant ceinture, assemblé sur la périphérie de ladite face supérieure dudit premier circuit imprimé ;
- un troisième circuit imprimé assemblé audit deuxième circuit imprimé et formant couvercle au-dessus de ladite face supérieure dudit premier circuit imprimé.

Ainsi, le module de mémorisation est protégé de toute tentative d'intrusion par le dessus et par le dessous par deux circuits imprimés jouant respectivement le rôle de socle et de couvercle du coffre-fort. En outre, un troisième circuit imprimé, évidé en sa partie centrale de façon à ne présenter qu'une forme de ceinture, forme les parois latérales de ce coffre-fort, et bloque ainsi l'accès au module de mémorisation par les côtés.

Selon un autre aspect de l'invention, le terminal étant formé de deux demi-coques assemblées l'une à l'autre au niveau d'un plan d'assemblage, le module de mémorisation est positionné dans un logement ménagé dans le terminal sensiblement perpendiculairement audit plan d'assemblage.

Ainsi, pour extraire le module de mémorisation du terminal de paiement, il est nécessaire d'ouvrir ce dernier en séparant totalement, ou au moins fortement, les deux demi-coques, et il n'est pas possible de faire glisser le module de mémorisation en dehors de son logement, et du terminal, par un espace réduit ménagé entre les deux demi-coques entrouvertes.

Un tel logement présente par exemple une forme parallélépipédique : sa longueur et sa largeur sont situées dans un plan perpendiculaire au plan d'assemblage, i.e. au plan de jonction de deux demi-coques formant le terminal. Cette longueur et cette largeur représentent des proportions importantes de la largeur et de la hauteur du terminal de paiement.

Selon une caractéristique avantageuse, un tel logement est fermé sur toutes ses faces, à l'exception d'une fente par laquelle le module de mémorisation est inséré dans le logement, une telle fente étant sensiblement parallèle au plan d'assemblage.

Ainsi, cinq des six parois du logement bloquent tout accès physique au module de mémorisation qu'il contient. Ces parois sont par exemple réalisées en matériau plastique, le logement étant moulé avec la demi-coque qui le contient.

Le module de mémorisation peut être inséré dans ce logement seul, ou protégé dans la structure de coffre-fort formée de circuits imprimés décrite ci-dessus.

Selon un autre aspect de l'invention, un tel module de mémorisation est noyé dans une résine solidifiée inapte à changer d'état. On coule en effet une résine liquide autour du module de mémorisation qui, après solidification, ne peut plus revenir à l'état liquide ou visqueux, de sorte que la résine solidifiée forme ainsi un rempart contre toute tentative d'accès au module de mémorisation. Cette résine peut être coulée autour du module de mémorisation quelle que soit sa position dans le terminal de paiement, et notamment qu'il soit ou non protégé par une structure de circuits imprimés formant coffre-fort, et qu'il soit ou non inséré dans le logement vertical décrit ci-avant.

Dans un mode de réalisation de l'invention, lorsque le module de mémorisation est inséré dans un tel logement (seul ou dans son coffre-fort), ce logement présente au moins une paroi intérieure nervurée permettant une meilleure adhérence de la résine.

On s'assure ainsi que la résine adhère aux parois du logement, et on évite que la résine et le module de mémorisation qu'elle contient puissent être extraits en bloc du logement.

L'invention concerne également un procédé de fabrication d'un terminal de paiement électronique comprenant un module de mémorisation de données relatives à au moins une transaction effectuée par le terminal, le terminal étant formé de deux demi-coques assemblées l'une à l'autre au niveau d'un plan d'assemblage.

Selon l'invention, un tel procédé comprend des étapes de :
- assemblage par soudure dudit module de mémorisation au sein d'une structure formant coffre-fort et comprenant au moins deux circuits imprimés ;
- insertion de ladite structure formant coffre-fort dans un logement ménagé dans ledit terminal sensiblement perpendiculairement audit plan d'assemblage ;
- coulage d'une résine dans ledit logement et solidification irréversible de ladite résine.

Ainsi, un tel procédé assure la fabrication d'un terminal de paiement dans lequel l'accès au module de mémorisation est sécurisé, et qui est donc résistant aux tentatives de fraudes exposées en préambule de ce document. En effet, le module de mémorisation est triplement protégé :
- d'une part, par une structure de circuits imprimés formant coffre-fort autour du module de mémorisation ;
- d'autre part, par sa présence dans un logement dont les dimensions principales sont perpendiculaires au plan d'assemblage des demi-coques formant le terminal de paiement, de sorte qu'il n'est pas possible d'extraire le module de mémorisation de son logement sans ouvrir très sensiblement le terminal, ce qui est alors aisément détectable ;
- enfin, par une résine coulée dans le logement qui vient recouvrir le module de mémorisation et la structure de coffre-fort qui l' protège, et qui les solidarise au logement, de façon à en empêcher leur extraction.

L'invention concerne également un procédé de fabrication d'un terminal de paiement électronique présentant en combinaison tout ou partie des caractéristiques exposées dans l'ensemble de ce document.

### 4. Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
- les figures 1A, 1B et 1C présentent différentes vues en perspective d'un terminal de paiement électronique selon l'invention ;
- la figure 2 présente une vue en coupe du terminal de paiement électronique des figures 1A à 1C ;
- la figure 3 illustre une structure de coffre-fort, à base de circuits imprimés, formant moyens de blocage d'accès au module de mémorisation du terminal de paiement de la figure 2 ;
- la figure 4 présente un logement ménagé dans la demi-coque inférieure du terminal de paiement pour recevoir et protéger le module de mémorisation du terminal de paiement de l'invention ;
- la figure 5 illustre le logement de la figure 4 après qu'une résine a été coulée dans ce dernier pour protéger et bloquer l'accès au module de mémorisation ;
- la figure 6 présente, sous forme d'organigramme, les étapes principales du procédé de fabrication du terminal de paiement électronique de l'invention.

### 5. Description détaillée de modes de réalisation de l'invention

Le principe général de l'invention repose sur la sécurisation de l'accès, dans un terminal de paiement électronique, à un module de mémorisation de données relatives aux transactions effectuées au moyen de ce terminal. En bloquant tout accès à ce module de mémorisation, on garantit ainsi l'intégrité, tant du module, que des données qu'il contient, et donc toute possibilité de fraude à l'égard de l'administration fiscale.

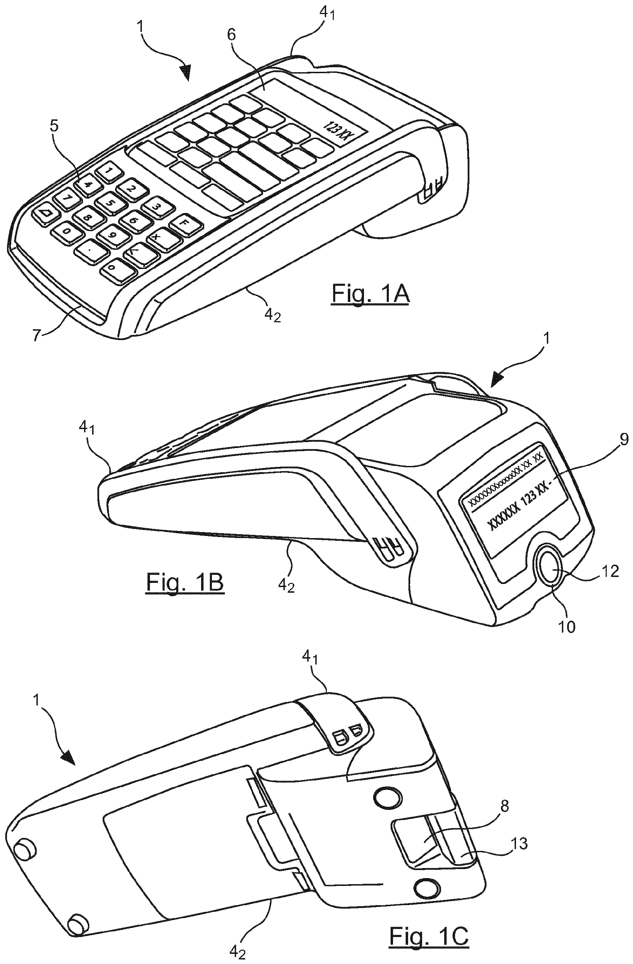

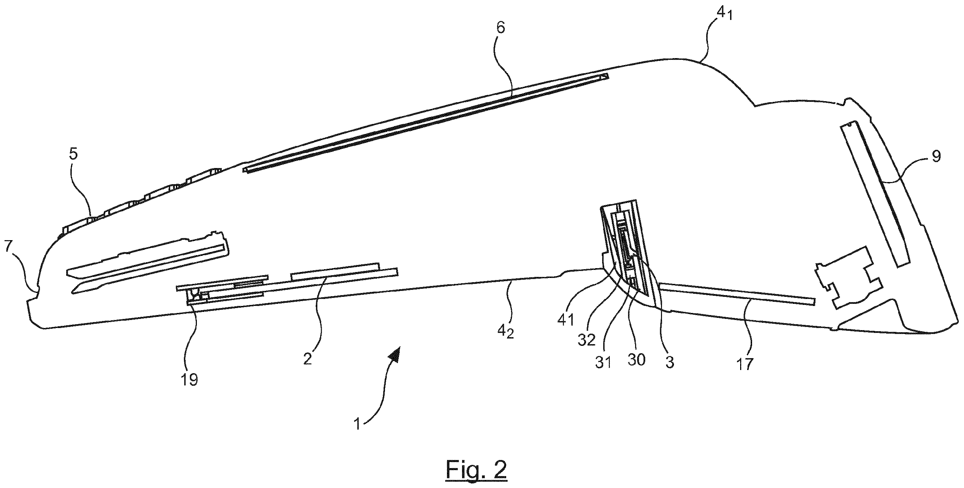

Dans les modes de réalisation décrits plus en détail par la suite en relation avec les **figures 1A, 1B, 1C** **et** **2****,** un tel terminal de paiement 1 intègre des fonctions de caisse enregistreuse, et même se substitue, pour les fonctions comptables et fiscales, à la caisse enregistreuse. En outre, un tel terminal 1 intègre plusieurs modules de mémorisation spécifiques, à savoir un module de mémorisation transactionnel 2 (c'est-à-dire que chaque transaction est enregistrée) et un module de mémorisation cumulatif 3.

Selon un mode de réalisation de l'invention, le module de mémorisation transactionnel 2 est extractible. Ainsi, il est possible, lorsque le module de mémorisation transactionnel 2 est plein, de le remplacer par un autre module de mémorisation transactionnel vierge. Par ailleurs, il est possible de consulter les opérations contenues dans ce module de mémorisation transactionnel 2 à l'aide d'un autre dispositif que le terminal de paiement 1 lui-même.

Selon un mode de réalisation de l'invention, un tel terminal 1 comprend une enceinte sécurisée au sens PCI (« Payment Card Industry ») et une enceinte sécurisée selon des règlementations nationales en vigueur. Ces deux enceintes sont contenues au sein du terminal, qui est construit à partir d'une demi coque supérieure 4₁ et d'une demi coque inférieure 4₂. Le terminal 1 comprend en outre un clavier 5 (comprenant les touches nécessaires à la saisie des données), un écran 6 et les moyens 7 nécessaires à l'utilisation d'un moyen de paiement (lecteur de carte à puce et/ou lecteur de carte à bande et/ou lecteur sans contact). Le terminal comprend également un module 8 de lecture de code à barres, lequel se trouve disposé dans la demi-coque inférieure 4₂. Ainsi, le terminal 1 peut être utilisé à la manière d'un dispositif classique de lecture de code à barres.

Selon un mode de réalisation de l'invention, un tel terminal 1 est portable. Plus particulièrement, un tel terminal 1 n'excède pas cinq cent grammes, la largeur du terminal au niveau de la touche « 5 » du clavier 5 n'excède pas 7,62 cm, la somme de la hauteur et de la largeur du terminal 1 au niveau de la touche « 5 » du clavier 5 n'excède pas 10,16 cm et la longueur du clavier est inférieure à 10,16 cm.

La **figure 2** présente plus en détail la structure interne d'un tel terminal de paiement électronique, dans un mode de réalisation particulier de l'invention. Un tel terminal 1 comprend notamment également une carte-mère, un circuit imprimé secondaire, une alimentation de type batterie, une imprimante permettant notamment d'imprimer des tickets de paiement, pour chaque transaction effectuée. Un circuit imprimé 17 pilote l'affichage sur les écrans 6 et 9. Le module de mémorisation transactionnel 2 (ou « EKU Board ») s'enfiche dans un connecteur 19.

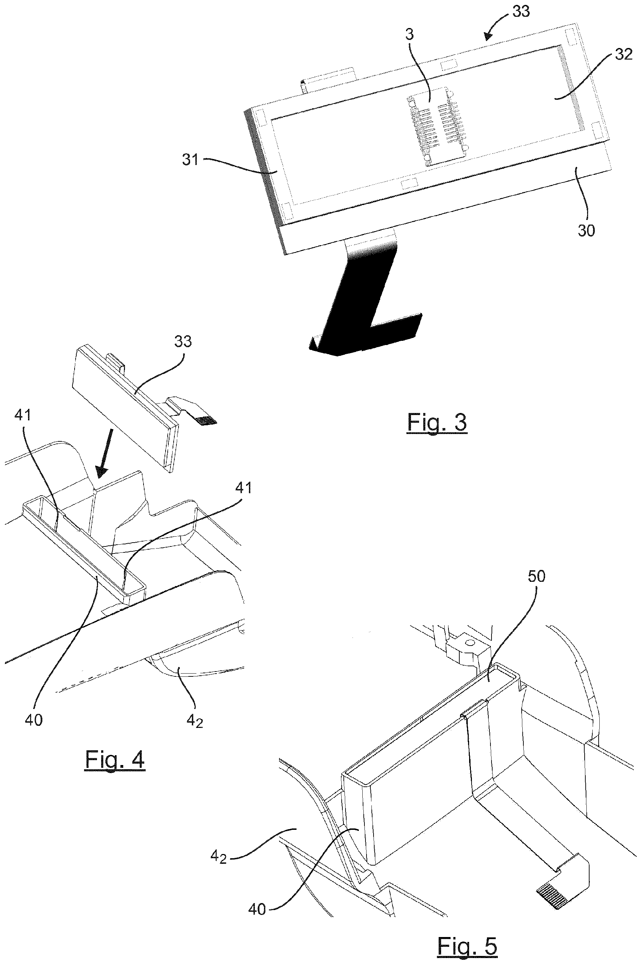

On présente désormais plus en détail, en relation avec les figures 3 à 5, différents moyens de blocage de l'accès au module de mémorisation cumulatif 3, également appelé mémoire fiscale, dans un mode de réalisation de l'invention.

Un tel module de mémorisation est conçu de façon à ce que les données qu'il contient ne puissent pas être effacées. Ces données, historiées dans le module de mémorisation 3, correspondent par exemple aux montants des transactions effectuées dans la journée par le commerçant, associés aux montants de TVA (pour Taxe sur la Valeur Ajoutée) correspondants.

La **figure 3** illustre une structure de coffre-fort 33, construite à partir de circuits imprimés, permettant de bloquer l'accès à la mémoire fiscale 3. La mémoire fiscale 3 est soudée sur un premier circuit imprimé 30, formant socle du coffre-fort 33. Un deuxième circuit imprimé 31 est évidé en sa partie centrale, de sorte qu'il présente une forme de ceinture : il est rapporté sur la périphérie du premier circuit imprimé 30, de façon que les différents composants soudés sur le premier circuit imprimé 30 se trouvent entourés par cette ceinture 31, et émergent dans la partie centrale évidée de ce deuxième circuit imprimé 31. Sur la figure 3, ce deuxième circuit imprimé 31 apparaît en transparence au travers d'un troisième circuit imprimé 32, formant le couvercle de cette structure de coffre-fort 33, le deuxième circuit imprimé 31 jouant quant à lui le rôle de parois latérales de ce coffre-fort 33.

Ainsi, pour accéder au module de mémorisation 3, ou aux données qu'il contient, il est nécessaire de traverser l'un des trois circuits imprimés 30, 31 et 32 de la structure de coffre-fort 33, qui forme donc moyen de blocage de l'accès à cette mémoire fiscale 3. Différents « via » sont en outre ménagés dans ces trois circuits imprimés. On peut également prévoir d'insérer dans ces circuits imprimés des maillages métalliques fins (en anglais « wire mesh »). Ainsi, lors de toute tentative d'accès au module de mémorisation 3 au travers de l'un des trois circuits imprimés 30 à 32, l'instrument utilisé risque d'entrer en contact avec l'un des fils métalliques de ce « wire mesh ». Ce contact peut déclencher un signal d'alerte ou mettre hors service le terminal de paiement 1.

Ainsi qu'illustré en **figure 4****,** cette structure de coffre-fort 33 est destinée à être insérée dans un logement 40, ménagé dans la demi-coque inférieure 4₂ du terminal de paiement 1. A titre de variante, le module de mémorisation 3 est introduit dans ce logement 40 sans avoir au préalable été protégé par une telle structure de coffre-fort 33, i.e. seuls le module de mémorisation 3 et un circuit imprimé sur lequel il est rapporté sont insérés dans le logement 40 décrit ci-après.

Un tel logement 40 se présente grossièrement sous la forme d'un parallélépipède rectangle (légèrement tronqué dans sa partie inférieure, pour épouser la forme de la demi-coque), dont les dimensions sont adaptées pour recevoir le coffre-fort 33. Les parois de ce logement sont réalisées en plastique, moulé avec la demi-coque inférieure, et forment d'autres moyens de blocage de l'accès au module de mémorisation 3. En effet, tout accès au module de mémorisation 3 ou aux données qu'il contient nécessite de percer les parois du logement 40 (à l'exception de la paroi supérieure du logement 40, qui reste ouverte pour permettre l'introduction de la mémoire fiscale 3, seule ou dans son coffre-fort 33).

En outre, ce logement 40 est disposé de telle façon dans le terminal de paiement 1 qu'il n'est pas possible d'extraire le module de mémorisation 3 qu'il contient sans ouvrir totalement ou quasi-totalement le terminal de paiement 1, par séparation des deux demi-coques 4₁ et 4₂ qui en constituent l'habillage extérieur. En effet, la plus grande face de ce logement 40 se trouve dans un plan sensiblement perpendiculaire au plan d'assemblage des deux demi-coques supérieure 4₁ et inférieure 4₂, i.e. au plan dans lequel ces deux demi-coques se joignent lors de la fermeture du terminal 1. En outre, l'insertion du module de mémorisation 3 dans le logement 40 se fait par la face supérieure de ce dernier. Pour pouvoir sortir la mémoire fiscale 3 du logement 40, il est donc nécessaire que la demi-coque supérieure 4₁ soit suffisamment éloignée de la demi-coque inférieure 4₂: il n'est donc pas possible d'extraire la mémoire fiscale 3 du logement 40 en maintenant le terminal de paiement 1 intègre.

Le positionnement même de ce logement 40, dans un plan principal perpendiculaire au plan d'assemblage des deux demi-coques, et le sens d'insertion du module de mémorisation 3 dans le logement 40, par la face supérieure de ce dernier (sensiblement parallèle au plan d'assemblage), forment donc également des moyens de blocage de l'accès au module de mémorisation 3, tant que le terminal de paiement 1 est intègre.

Dans un mode de réalisation de l'invention, un tel logement 40 présente par ailleurs sur ses parois internes une ou plusieurs nervures 41. De telles nervures permettent d'améliorer l'adhérence d'une résine aux parois internes du logement 40. Ces nervures 41 permettent également de positionner correctement la mémoire fiscale 3 lors de l'assemblage.

En effet, ainsi qu'illustré en **figure 5****,** après insertion du module de mémorisation 3 (seul ou dans son coffre-fort 33) dans le logement 40, on coule une résine 50 dans le logement 40, de façon à recouvrir totalement la mémoire fiscale 3. Cette résine 50, coulée à l'état liquide, se solidifie autour de la mémoire fiscale 3, et forme ainsi d'autres moyens de blocage de l'accès à cette mémoire fiscale 3. En effet, cette résine à une phase est choisie de façon à ne plus pouvoir changer d'état après sa solidification : ainsi, elle ne peut plus reprendre un état liquide, ou même simplement mou, qui permettrait d'en extraire la mémoire fiscale 3.

En outre, la résine 50 adhère suffisamment aux parois internes du logement 40, par exemple grâce aux nervures 41, ou au revêtement des parois internes du logement 40, pour qu'il ne soit pas possible d'extraire « en bloc » la résine 50 et la mémoire fiscale 3 du logement 40, mais que cette extraction nécessite la destruction, ou à tout le moins l'altération du logement 40 lui-même.

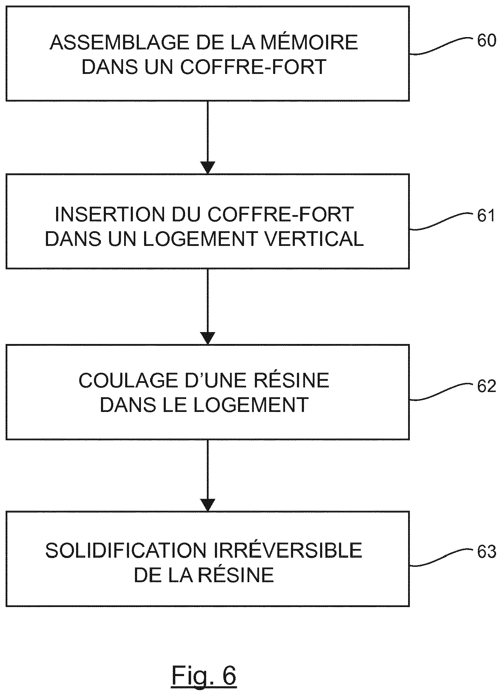

On présente désormais, en relation avec la **figure 6****,** les différentes étapes du procédé de fabrication du terminal de paiement électronique 1 décrit ci-avant, dans un mode de réalisation de l'invention. On notera que, comme illustré en figure 2, un tel terminal de paiement électronique comprend un très grand nombre de composants ; en conséquence, sa fabrication compte de très nombreuses étapes d'assemblage de ces différents composants les uns avec les autres. L'organigramme de la figure 6 focalise plus particulièrement sur les étapes de la fabrication nécessaires pour assurer, dans un terminal de paiement électronique conforme à l'invention, le blocage de l'accès au module de mémorisation des données relatives aux transactions effectuées par le terminal.

Ainsi, au cours d'une première étape référencée 60, on assemble le module de mémorisation, ou mémoire fiscale 3, au sein d'une structure de coffre-fort 33 telle que décrite précédemment en relation avec la figure 3. Ainsi, on soude la mémoire fiscale sur un circuit imprimé 30 formant socle du coffre-fort, puis on rapporte sur ce premier circuit imprimé 30 un deuxième circuit imprimé 31 formant ceinture, qui sert de parois latérales au coffre-fort 33. On assemble ensuite avec ce deuxième circuit imprimé 31, un troisième circuit imprimé 32 formant couvercle du coffre-fort. A titre de variante, le coffre-fort peut ne comprendre que les premier et troisième circuits imprimés 30 et 32.

Au cours d'une deuxième étape référencée 61, on insère ensuite ce coffre-fort 33 ainsi assemblé dans un logement 40 ménagé dans la demi-coque inférieure 4₂ du terminal de paiement 1. Ce logement est sensiblement perpendiculaire, dans ses plus grandes dimensions, au plan d'assemblage des deux demi-coques formant l'habillage extérieur du terminal de paiement 1. L'insertion du coffre-fort s'opère en outre par la face supérieure du logement 40, qui est sensiblement parallèle au plan d'assemblage.

Au cours d'une troisième étape référencée 62, une résine 50 à une phase est coulée dans le logement 40, de façon à recouvrir intégralement le coffre-fort 33 contenant le module de mémorisation 3.

Au cours d'une étape référencée 63, la résine 50 se solidifie de façon irréversible, en adhérant aux parois intérieures du logement 40, de façon à rendre impossible toute extraction du module de mémorisation 3.

Dans d'autres modes de réalisation de l'invention, certaines des étapes présentées sur la figure 6 sont optionnelles. Ainsi, il est possible de fabriquer un terminal de paiement électronique conforme à l'invention, i.e. qui présente des moyens de blocage de l'accès à la mémoire fiscale, simplement en mettant en oeuvre l'étape 60 d'assemblage de la mémoire fiscale dans une structure de coffre-fort, à l'exclusion des autres étapes, ou en combinant cette étape d'assemblage référencée 60 avec les étapes référencées 62 et 63 relatives au coulage de la résine.

De même, il est possible de ne mettre en oeuvre que l'étape référencée 61 d'insertion de la mémoire fiscale dans un logement de forme et de disposition particulières dans le terminal de paiement, sans avoir au préalable assemblé cette mémoire fiscale dans une structure de coffre-fort. Il est également possible de combiner cette étape 61 d'insertion de la mémoire fiscale dans un logement spécifique avec les étapes référencées 62 et 63 relatives au coulage d'une résine.

Enfin, il est possible de bloquer l'accès à la mémoire fiscale par simple coulage de résine 62 et solidification irréversible associée 63, à l'exclusion des autres étapes d'assemblage dans une structure de coffre-fort et d'insertion dans un logement spécifique.

Dans tous ces cas, il est impossible d'accéder à la mémoire fiscale si le terminal de paiement électronique reste intègre.

## Revendications

1. Terminal (1) de paiement électronique comprenant un module de mémorisation de données relatives à au moins une transaction effectuée au moyen dudit terminal, ledit terminal comprenant des moyens de blocage d'un accès audit module de mémorisation (3), aptes à empêcher tout accès audit module de mémorisation lorsque ledit terminal de paiement est intègre, ledit module de mémorisation (3) étant inséré au sein d'une structure formant coffre-fort (33) comprenant au moins deux circuits imprimés (30, 31, 32), ladite structure de coffre-fort comprenant:
- un premier circuit imprimé (30) sur une face supérieure duquel est soudé ledit module de mémorisation (3) ;
- un deuxième circuit imprimé (31) formant ceinture, assemblé sur la périphérie de ladite face supérieure dudit premier circuit imprimé ;
- un troisième circuit imprimé (32) assemblé audit deuxième circuit imprimé et formant couvercle au-dessus de ladite face supérieure dudit premier circuit imprimé,
ledit terminal étant **caractérisé en ce que**, ledit terminal étant formé de deux demi-coques (4₁, 4₂) assemblées l'une à l'autre au niveau d'un plan d'assemblage, ledit module de mémorisation (3) est positionné dans un logement (40) ménagé dans ledit terminal sensiblement perpendiculairement audit plan d'assemblage.

2. Terminal de paiement selon la revendication 1, **caractérisé en ce que** ledit logement (40) est fermé sur toutes ses faces, à l'exception d'une face formant fente par laquelle ledit module de mémorisation est inséré dans ledit logement, ladite face formant fente étant sensiblement parallèle audit plan d'assemblage.

3. Terminal de paiement selon l'une quelconque des revendications 1 er 2, **caractérisé en ce que** ledit module de mémorisation est noyé dans une résine (50) solidifiée inapte à changer d'état.

4. Terminal de paiement selon l'une quelconque des revendications 1, 2 et 3, **caractérisé en ce que** ledit logement (40) présente au moins une paroi intérieure nervurée (41) permettant une meilleure adhérence de ladite résine.

5. Procédé de fabrication d'un terminal de paiement électronique comprenant un module de mémorisation de données relatives à au moins une transaction effectuée par ledit terminal, ledit terminal étant formé de deux demi-coques (4₁, 4₂) assemblées l'une à l'autre au niveau d'un plan d'assemblage,
**caractérisé en ce qu'**il comprend des étapes de :
- assemblage par soudure dudit module de mémorisation (3) au sein d'une structure formant coffre-fort (33) et comprenant au moins deux circuits imprimés (30, 31, 32) ;
- insertion de ladite structure formant coffre-fort (33) dans un logement (40) ménagé dans ledit terminal sensiblement perpendiculairement audit plan d'assemblage ;
- coulage d'une résine (50) dans ledit logement et solidification irréversible de ladite résine.

## Patentansprüche

1. Elektronisches Zahlungsendgerät (1), umfassend ein Speichermodul von Daten, die sich auf mindestens eine mit Hilfe des Endgeräts durchgeführte Transaktion beziehen, wobei das Endgerät Mittel zum Blockieren eines Zugangs zu dem Speichermodul (3) umfasst, die geeignet sind, jeden Zugang zu dem Speichermodul zu verhindern, wenn das Zahlungsendgerät integer ist, wobei das Speichermodul (3) in eine einen Safe (33) bildende Struktur eingesetzt ist, umfassend mindestens zwei gedruckte Schaltungen (30, 31, 32), wobei die Safestruktur umfasst:
- eine erste gedruckte Schaltung (30), auf deren Oberseite das Speichermodul (3) geschweißt ist;
- eine zweite gedruckte Schaltung (31), die einen Gürtel bildet, die an der Peripherie der Oberseite der ersten gedruckten Schaltung vorgesehen ist;
- eine dritte gedruckte Schaltung (32), die an der zweiten gedruckten Schaltung vorgesehen ist und eine Abdeckung über der Oberseite der ersten gedruckten Schaltung bildet,
wobei das Endgerät **dadurch gekennzeichnet ist, dass**, da das Endgerät aus zwei miteinander im Bereich einer Verbindungsebene verbundenen Halbschalen (4₁, 4₂) gebildet ist, das Speichermodul (3) in einer Aufnahme (40) positioniert ist, die in dem Endgerät im Wesentlichen senkrecht auf die Verbindungsebene vorgesehen ist.

2. Zahlungsendgerät nach Anspruch 1, **dadurch gekennzeichnet, dass** die Aufnahme (40) auf allen ihren Seiten geschlossen ist, mit Ausnahme einer einen Schlitz bildenden Seite, durch den das Speichermodul in die Aufnahme eingesetzt wird, wobei die einen Schlitz bildende Seite im Wesentlichen parallel zur Verbindungsebene ist.

3. Zahlungsendgerät nach einem der Ansprüche 1 und 2, **dadurch gekennzeichnet, dass** das Speichermodul in ein verfestigtes Harz (50) eingelassen ist, das nicht geeignet ist, seinen Zustand zu ändern.

4. Zahlungsendgerät nach einem der Ansprüche 1, 2 und 3, **dadurch gekennzeichnet, dass** die Aufnahme (40) mindestens eine gerippte Innenwand (41) aufweist, die eine bessere Haftung des Harzes ermöglicht.

5. Verfahren zur Herstellung eines elektronischen Zahlungsendgeräts, umfassend ein Speichermodul von Daten, die sich auf mindestens eine mit Hilfe des Endgeräts durchgeführte Transaktion beziehen, wobei das Endgerät von zwei im Bereich einer Verbindungsebene verbundenen Halbschalen (4₁, 4₂) gebildet ist,
**dadurch gekennzeichnet, dass** es die folgenden Schritte umfasst:
- Montage das Speichermoduls (3) in einer einen Safe (33) bildenden Struktur, umfassend mindestens zwei gedruckte Schaltungen (30, 31, 32) durch Schweißen;
- Einsetzen der einen Safe (33) bildenden Struktur in eine Aufnahme (40), die in dem Endgerät im Wesentlichen senkrecht auf die Verbindungsebene vorgesehen ist;
- Gießen eines Harzes (50) in die Aufnahme und irreversible Verfestigung des Harzes.

## Claims

1. Electronic payment terminal (1) comprising a memory module for storing data relating to at least one transaction carried out by means of said terminal, said terminal comprising means for blocking access to said memory module (3), capable of preventing any access to said memory module when said payment terminal is intact, said memory module (3) being inserted in a structure forming a safe (33) comprising at least two printed circuits (30, 31, 32), said safe structure comprising:
- a first printed circuit (30), on to an upper face of which said memory module (3) is soldered;
- a second printed circuit (31) forming a belt, joined to the periphery of said upper face of said first printed circuit;
- a third printed circuit (32) joined to said second printed circuit and forming a cover above said upper face of said first printed circuit,
said terminal being **characterised in that**, said terminal being formed by two half shells (4₁, 4₂) joined together on an assembly plane, said memory module (3) is positioned in a receptacle (40) provided in said terminal substantially perpendicularly to said assembly plane.

2. Payment terminal according to claim 1, **characterised in that** said receptacle (40) is closed on all of its faces except a face forming an opening through which said memory module is inserted in said receptacle, said face forming an opening being substantially parallel to said assembly plane.

3. Payment terminal according to claim 1 or 2, **characterised in that** said memory module is embedded in a resin (50) which is solidified and incapable of changing state.

4. Payment terminal according to any of claims 1, 2 and 3, **characterised in that** said receptacle (40) has at least one ribbed internal wall (41) whereby better adhesion of said resin is possible.

5. Method of manufacturing an electronic payment terminal comprising a memory module for storing data relating to at least one transaction carried out by said terminal, said terminal being formed by two half-shells (4₁, 4₂) joined together on an assembly plane, **characterised in that** it comprises the stages of:
- joining together by soldering said memory module (3) in a structure forming a safe (33) and comprising at least two printed circuits (30, 31, 32);
- inserting said structure forming a safe (33) in a receptacle (40) provided in said terminal substantially perpendicularly to said assembly plane;
- pouring a resin (50) into said receptacle and irreversibly solidifying said resin.
